# EUROPEAN PATENT SPECIFICATION

(11) **EP 1 793 109 B1**
(45) Date of publication and mention of the grant of the patent: **19.05.2010**
(21) Application number: 05026064.5
(22) Date of filing: 30.11.2005
(51) Int. Cl.: F02D 41/18

(54) **Method and apparatus for controlling a combustion engine**
Verfahren und Vorrichtung zur Steuerung einer Brennkraftmaschine
Méthode et appareil de commande d'un moteur à combustion

(43) Date of publication of application: 06.06.2007
(73) Proprietor: Delphi Technologies Holding S.à.r.l., 4940 Bascharage (LU)
(72) Inventor: Schreurs, Bart, 6700 Waltzing (BE); Schmitt, Julien, 57970 Yutz (FR)
(74) Representative: Gregory, John David Charles

(56) References cited:
- EP-A- 1 327 760
- EP-A- 1 371 837
- EP-A- 1 482 152
- DE-A1-102004 005 134
- US-A- 4 644 474
- US-A- 5 979 419
- US-A- 6 014 963
- US-B1- 6 370 935
- US-B1- 6 571 613

## Description

The present invention relates to a method for controlling a combustion engine. The invention also relates to a corresponding apparatus provided for and capable of performing said method. Combustion engines, as is per se known, generate energy by means of combusting fuel together with intake air. Combustion quality and thus both efficiency and emissions are directly linked to an air fuel ratio during combustion. Therefore, as is also per se known in the art, an amount of intake air, hereinafter referred to as air flow, is accounted for by at least one controller, for ensuring combustion quality.

As briefly mentioned above, the amount of fresh air (air flow) entering the engine has a direct impact on emissions since it affects the air fuel ratio and, where applicable, an exhaust gas recirculation rate, and may also have an impact on engine power, i.e. overall efficiency. Modifications of any of the components in the air path are likely to cause an emission drift. Such modifications are mainly due to ageing and they could be, for example, air meter drift, e.g. wrong measurement of the air flow, intake valve sooting, e.g. modifications of the engine volumetric efficiency, et cetera.

The inventors have found the approaches known so far not to be optimal.

US 6,370,935 B1 discloses an approach for on-line calibration of mass airflow sensors, which includes comparing of sensed MAF values with an ideal MAF value obtained using data from sensors downstream of the MAF sensor. Calibration is effected online or while the engine is in normal operation. Similar approaches, as far as a calibration of an MAF sensor is concerned, are disclosed in US 6,571,613 B1, DE 10 2004 005134A1, EP 1 327 760 A and EP 1 371 837 A. EP 1 482 152 A teaches a control apparatus or control method for an internal combustion engine, where a correction amount representative of the control amount corrected in accordance with the approach is updated when the internal combustion engine is in a predetermined operation state.

An object of the present invention therefore is to provide a remedy for the defects of the prior art.

It is further an object of the present invention to overcome problems and drawbacks described above.

The invention proposes to employ a the method defined in Claim 1 for controlling a combustion engine which combusts fuel together with intake air, wherein an amount of intake air (air flow) is accounted for by at least one controller, which effects the operation of the combustion engine, wherein an air meter correction scheme is learnt on the basis of an estimated reference flow and wherein said learnt air meter correction scheme is applied to an air meter reading and subsequently fed to said at least one controller, thus ensuring that modifications in the air path are accounted for on the basis of the said correction scheme.

The invention also provides for an apparatus capable of and provided for performing the above and/or the subsequently described method steps.

The essential advantages of the invention are that changes in the air path are accounted for and compensated so that detrimental effects caused by the aforementioned and other changes in the air path, are prevented or at least alleviated.

The dependent claims outline advantageous forms of embodiments of the method according to the invention. Corresponding apparatuses, capable of and provided for performing these method steps are also contemplated by the invention.

In accord with the invention the step of learning an air meter correction scheme is activated on account of an evaluation of predefined or prefinable conditions, hereinafter referred to as enabling conditions, thus ensuring that the step of learning an air meter correction scheme is only activated once these conditions, such as the presence of a so-called deceleration fuel cut-off status, is identified.

In further accord with the present invention, the evaluation of the enabling conditions further comprises a step of identifying whether a detected deceleration meets certain predefined or predefinable criteria. On this basis the step of learning an air meter correction scheme is activated only if a deceleration fuel cut-off status is identified and if the deceleration, more particularly a deceleration rate, meets said criteria. This further ensures, that the learning of the air meter correction scheme is only initiated, under conditions optimally representing or resembling a reference scenario and therefore providing an optimal basis for the learning of the air meter correction scheme, as it has been found that the reference flow is equal or at least sufficiently close to the air flow when the learn conditions are met because all air actuators are in a known position and an EGR valve, where applicable, is closed.

In still further accord with the invention the reference flow is estimated on the basis of both speed and density of the air flow. The reference flow estimation thus accounts for varying conditions, such as air flow temperature and air flow humidity.

In still further accord with the invention the reference flow is estimated on the basis of further characteristics of the combustion engine, such as manifold pressure, air temperature, cylinder volume and/or volumetric efficiency, et cetera. If the volumetric efficiency is applied, this parameter is mapped vs. engine speed and exhaust to intake pressure ratio.

In still further accord with the invention, the air meter correction scheme is based on a limited number of air meter correction values, wherein, based on said air meter correction values, an air meter correction is interpolated and applied to the air meter reading. Said limited number of air meter correction values accounts for the situation, where under optimal conditions, one would normally aim to having as many correction values as possible. However, obtaining said correction values is based on measured values and estimated values and thus influenced by statistic effects. Therefore, accounting on too many correction values, i.e. too few measured and estimated values underlying each correction value, could involve correction values which are based on parameters disturbed or distorted by detrimental effects such as noise, et cetera. Thus, accounting the air meter correction scheme on a limited number of air meter correction values, such as eight, six or four air meter correction values, ensures that each correction value is based on a number of input parameters, where said number is sufficiently high to level statistic effects, and thus provides for a reasonable reliability of the resulting air meter correction values.

Other features and advantages of the present invention will appear from the following description of a preferred embodiment of the invention, given as a non-limiting example, illustrated in the drawings. All the elements which are not required for the immediate understanding of the invention are omitted. In the drawings, the same elements are provided with the same reference numerals in the various figures, and in which:
- Fig. 1: is a schematically simplified block of a combustion engine;
- Fig. 2: is an exemplary situation with sensor data drift;
- Fig. 3: is a simplified block diagram of the control method according to the invention and
- Fig. 4: portrays an exemplary result of an employment of the invention.

In the following description, for purposes of explanation and not limitation, specific details are set forth, such as particular embodiments, data flows, signalling implementations, interfaces, techniques, etc. in order to provide a thorough understanding of the present invention. However, it will be apparent to one skilled in the art that the present invention may be practiced in other embodiments that depart from these specific details. For example, while the present invention is sometimes described in the context of a combustion engine of the diesel type those skilled in the art will appreciate that the present invention can be implemented in combustion engine.

In other instances, detailed descriptions of well-known methods, interfaces, devices, and signalling techniques are omitted so as not to obscure the description of the present invention with unnecessary detail. Moreover, individual function blocks are shown in some of the figures. Those skilled in the art will appreciate that the functions may be implemented using individual hardware circuits, using software functioning in conjunction with a suitably programmed digital microprocessor or general purpose computer, using an application specific integrated circuit (ASIC), and/or using one or more digital signal processors (DSPs).

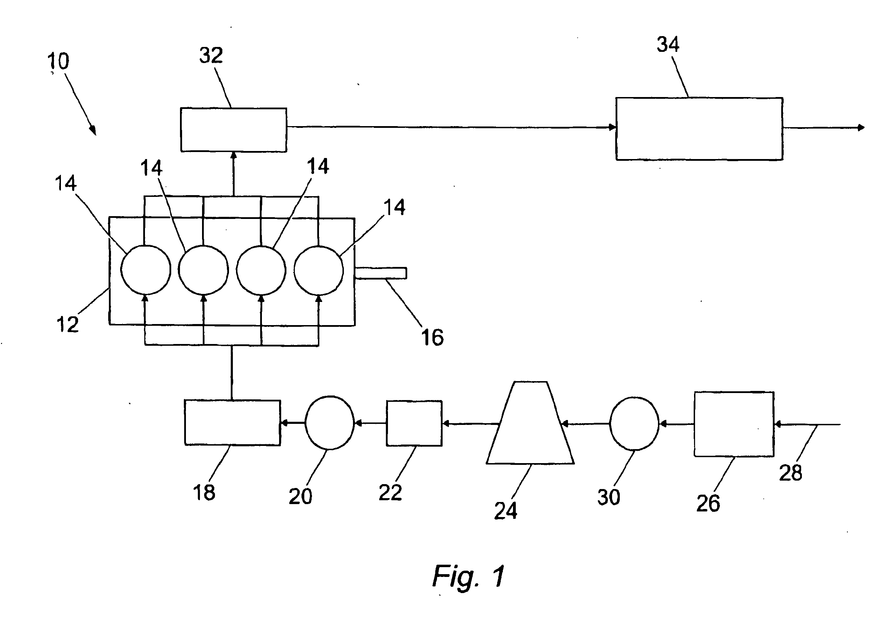

Fig. 1 shows a schematically simplified block diagram of a combustion engine 10, considering, as an example, a diesel motor, whereby an engine block 12 is represented by four schematically indicated cylinders 14 and a crank shaft 16. An intake manifold 18, a throttle 20 and an intercooler 22 are, in the direction of the mass flow through the combustion engine 10, located upstream of the engine block 12. A compressor 24 and an air filter 26 are attached thereto and located further upstream of the engine block 12. A fresh air inlet 28 is located at the input of the air filter 26. Between the compressor 24 and the air filter 26 is located an air meter sensor 30 for providing a measure representative of an air flow through the intake line 18-30, i.e. the air path. Corresponding with the air path 18-30 is provided downstream of the engine block 12 and exhaust path comprising at least an exhaust manifold 32 and an exhaust line 34.

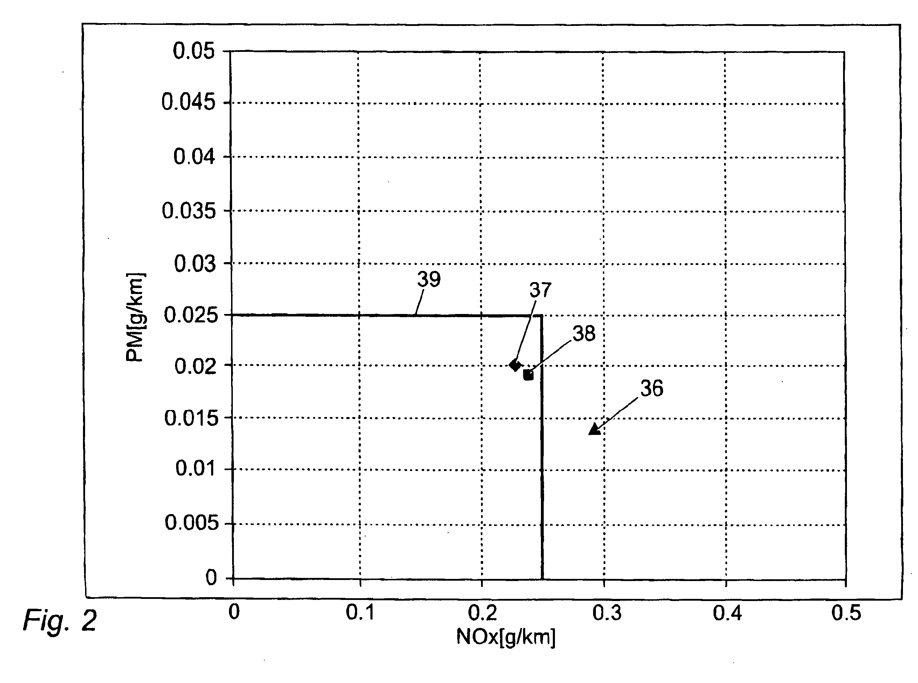

Fig. 2 is a simplified scenario for explaining sensor data drift. In the coordinate system portrayed in Fig. 2 the horizontal axis is an NOx concentration in [g/km] and the vertical axis indicates an emission of particulate matter (PM) in [g/km]. Reference numeral 36 denotes combustion effects in terms of emission, where the combustion is controlled on account of external data provided by an external sensor, such as the air meter sensor 30 (Fig. 1). Reference numeral 37 denotes the relevant combustion effects in terms of emission pertaining to a "real value" for the relevant external data. As can be seen from Fig. 2 a deviation between the effects resulting from measured data 36 and the real data 37 is present.
The invention aims at levelling such deviations. Accordingly, the measured data is corrected to better reflect the real data. To this end, reference numeral 38 represents combustion effects in terms of emission, where the combustion is controlled on account of corrected data based on the measured data and a correction scheme described hereinafter. An area 39 is shown in the coordinate system which represents thresholds in regards to both NOx and PM emissions. The thresholds could pertain to given standards, such as the so-called "EURO4" standards. It can be seen that the application of measured data, such as data pertaining to air flow, which might be affected by sensor drift or similar effects, could result in a combustion which fails to meet these thresholds. However, with the application of the correction scheme according to the invention, the emissions are again below the relevant thresholds.

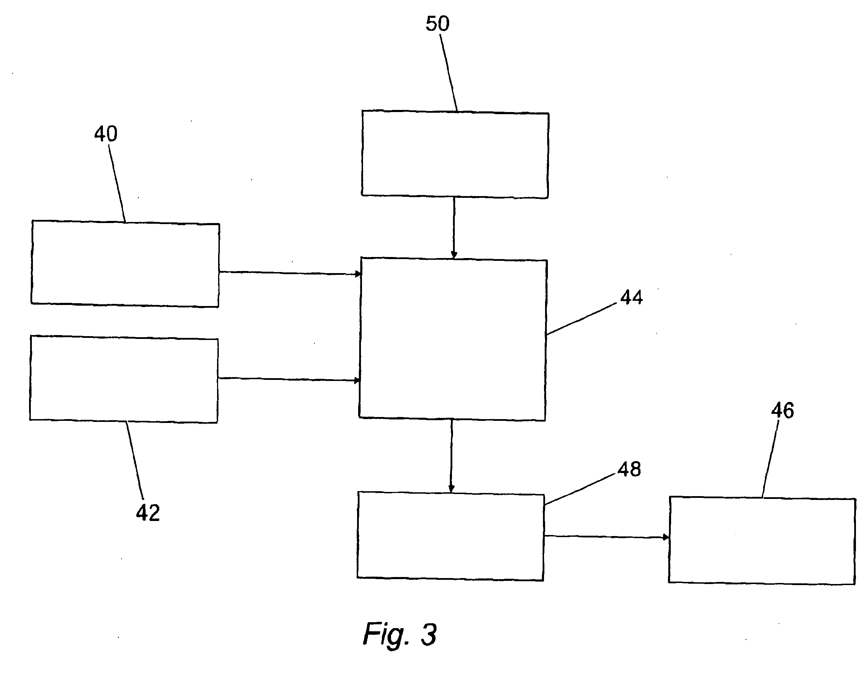

Fig. 3 is a simplified block diagram representative of the method according to the invention and at least partly a flowchart of the method steps performed when employing the method also.

The method relies on at least two inputs, namely a reference flow 40 and an air meter reading 42. The reference flow 40 is estimated using a "speed times density" approach. In a preferred approach the reference flow further employs the following input variables: manifold pressure (measured), air temperature (from a sensor or a model), cylinder volume and/or volumetric efficiency. The volumetric efficiency, where applicable, is mapped vs. engine speed and exhaust to intake pressure ratio.

The air meter reading 42 is a measure provided by the air meter sensor 30 (Fig. 1). The air meter reading 42 has found to be influenced by errors caused by drift et cetera. Thus the air meter reading 42, more specifically the errors in the air meter reading 42, are aimed to be compensated by the invention.

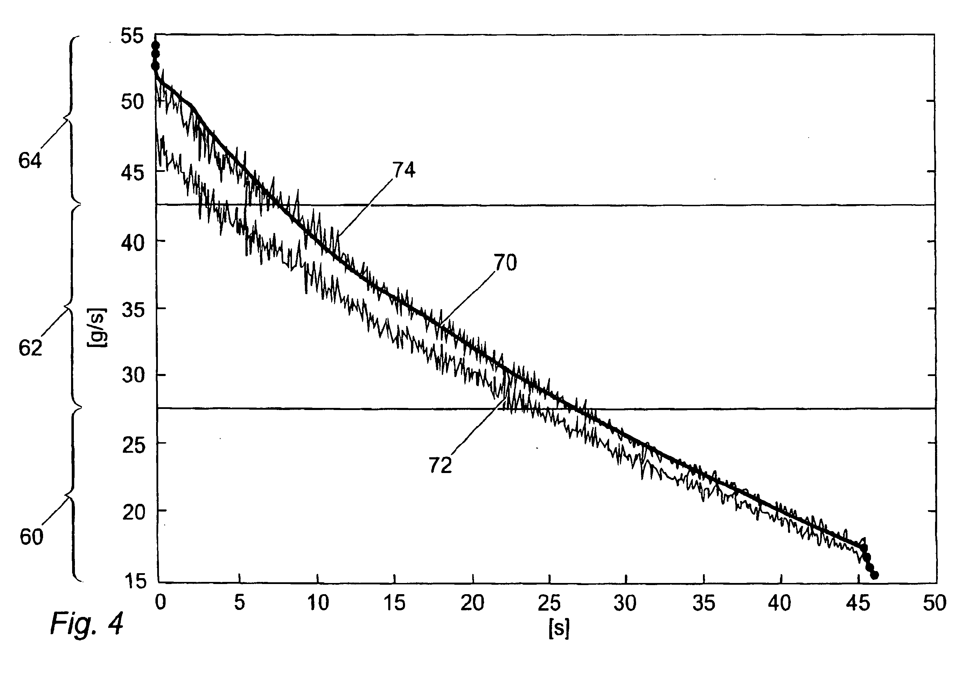

To accomplish this the invention provides for the employment of a function block provided for air meter correction learn 44, which learns an average error in individual zones 60, 62, 64 (Fig. 4), e.g flow zones, and stores the error, i.e. an average deviation, in an non-volatile memory (not shown). The algorithm comprised in the air meter correction learn function block 44 is not sensitive to noise because of averaging, i.e. by the algorithm taking into account a plurality of readings. A wide flow range can be covered by learning the air meter correction scheme because it is not performed with respect to a specific operating point. The above error basically is a deviation between the reference flow 40 and the air meter reading 42. For each flow zone this error is stored as a corresponding air meter correction value. The plurality of all stored air meter correction values is the air meter correction scheme. Once an air meter correction scheme is available, the air meter reading is processed by applying said learnt air meter correction scheme to the air meter reading and feeding same to at least one controller, such as an EGR control 46 (exhaust gas ratio control). Applying the learnt air meter correction scheme to the air meter reading 42 is preferably accomplished by means of a correction interpolation means 48, which interpolates on the basis of the relevant air meter correction values a temporarily correction value and applies same to the air meter reading 42 in order to obtain a corrected air meter reading suitable for feeding to the EGR control 46.

In a preferred embodiment the step of learning an air meter correction scheme by means of function block 44 is only performed once certain predefined or predefinable conditions, hereinafter referred to as enabling conditions, are met. Whether or not these enabling conditions are met is verified by an activation block 50. The enabling conditions are in particular provided to ensure that the step of learning the air meter correction scheme is only performed during a certain deceleration profile, i.e. a deceleration profile involving further constraints. One of these constraints is that the learn is always performed under deceleration fuel cut-off conditions to make the overall systems as easy to model as possible since under deceleration fuel cut-off any fuel influence can be ignored. Furthermore, under the deceleration fuel cut-off status all air actuators and, where applicable, all EGR actuators, can be forced to a fixed position without impacting the drivability of a vehicle, in the engine control unit of which the invention is normally implemented. These forced positions involve, where applicable, EGR forced close, variable geometry turbine, swirl and throttle forced to a fixed position. Furthermore, the deceleration has to have a certain rate, i.e. a certain deceleration rate, in order to ensure proper functioning of the correction learn, since it has been found that both too fast and too slow deceleration are not optimal for the correction learn. Finally, the algorithm implemented in the function block 44 never learns under steady state conditions, which is also accounted for by means of the activation block 50.

Once these enabling conditions are met, the reference flow 40 is equal or sufficiently similar to the air flow because of the then known parameters.

The before mentioned means, i.e. the air meter correction learn function block 44, the activation block 50 and the correction interpolation means are comprised in an apparatus (not specifically shown) for controlling a combustion engine which is provided for and capable of performing the method described beforehand. It will be apparent to those skilled in the art that such apparatus could be provided in software or in hardware or in a combination of both software and hardware. As mentioned before, the apparatus is normally comprised in an engine control unit (not shown) of a vehicle.

Fig. 4 shows an exemplary result of the invention used in practice, wherein in the coordinate system shown in Fig. 4 the horizontal axis is a time axis and the vertical axis is a mass flow axis, where the mass flow is given in grams per second, i.e. [g/s].

The data portrayed in Fig. 4 pertains to a number of exemplary flow zones 60, 62, 64. A first graph 70 represents an estimated flow as provided by the reference flow 40 (Fig. 3). A second graph 72 represents a reading from the air meter 30 (Fig. 1) and thus the air meter reading 42 (Fig. 3).

As can be seen from the exemplary data in Fig. 4 the first graph 70 and the second graph 72, i.e. the estimated flow and the air meter reading, deviate. What is more, the deviation varies for different mass flows, i.e. at low mass flows, around the area of 20g/s, the deviation is low, while at mass flows between 45g/s and 50g/s the deviation is higher. These deviations at individual sampling points are recorded and accounted for by the air meter correction learn 44.

With only a single point of measured data, i.e. a single point of data in the second graph 72, and single point of estimated data which is perceived as representing "real data", i.e. a single point of data in the first graph 70, the correction scheme should normally provide for the corrected data to coincide with the "real data". However, with the invention accounting for a plurality of measured data and a corresponding plurality of real data, any correction factor applied to move the measured data to better comply with the real data is based on an average of the data relied on, i.e. on an "average deviation" between measured data and real or estimated data. In order to better account for non-linear drift effects and non-linear deviation characteristics resulting therefrom, the invention proposes to employ a plurality of flow zones 60-64, wherein for each zone 60-64 a relevant correction factor is maintained and applied when correcting the measured data.

For example, an average deviation for an area between 15g/s and 30g/s could be stored as a first air meter correction value and a second air meter correction value could be stored for the area between 30g/s and 55g/s. Both these air meter correction values would form the air meter correction scheme. When employing this air meter correction scheme an air meter correction is interpolated on the basis of these two air meter correction values and applied to the relevant air meter reading. The result is a third graph 74 which represents the corrected air meter reading or the corrected air flow. The above example with only two air meter correction values is purely exemplary. Other numbers of air meter correction values, such as three air meter correction values, four air meter correction values, six air meter correction values or eight air meter correction values, etc., pertaining to the number and position of individual flow zones 60-64, could be employed also. Furthermore, the number of air meter correction values forming the air meter correction scheme, i.e. the number of underlying zones 60-64, can be variable.

Once the corrected air meter data or the corrected air flow is employed when controlling the combustion engine 10, the corrected air flow data provides for increased combustion stability and reduced emissions.

Summarizing the above, the invention can briefly be described as proposing a method and a corresponding apparatus for controlling a combustion engine, where a distortion in measured data, such a data drift, is accounted for by applying a correction scheme, wherein said correction scheme is a result of a method step which involves the learning of a deviation between measured data and expected data.

Although a preferred embodiment of the invention has been illustrated and described herein, it is recognized that changes and variations may be made without departing from the invention as set forth in the claims. More specifically, while the particular engine control method and the corresponding apparatus as herein shown and described in detail is fully capable of attaining the above-described objects of the invention, it is to be understood that it is the presently preferred embodiment of the invention and thus is representative of the subject matter which is broadly contemplated by the present invention. However, the scope of the present invention fully encompasses other embodiments which may become obvious to those skilled in the art. Accordingly, the scope of the present invention is to be limited by nothing other than the appended claims, in which, for example, reference to an element in the singular is not intended to mean "one and only one" unless explicitly so stated, but rather "one or more". All structural and functional equivalents to the elements of the above-described preferred embodiment that are known, or later come to be known, to those of ordinary skill in the art are expressly incorporated herein by reference and are intended to be encompassed by the present claims. Moreover, it is not necessary for a device or method to address each and every problem sought to be solved by the present invention, in order to be regarded as being encompassed by the present claims.

### Reference Numerals

- 10: Combustion Engine
- 12: Engine Block
- 14: Cylinder
- 16: Crank Shaft
- 18: Manifold
- 20: Throttle
- 22: Intercooler
- 24: Compressor
- 26: Air Filter
- 28: Air Inlet
- 30: Air Meter Sensor
- 32: Exhaust Manifold
- 34: Exhaust Line
- 36: Measured Data
- 37: Real Data
- 38: Corrected Data
- 39: Area
- 40: Reference Flow
- 42: Air Meter Reading
- 44: Air Meter Correction Learn
- 46: Exhaust Gas Ratio Control (EGR)
- 48: Interpolation Means
- 50: Activation Block
- 60: Flow Zone
- 62: Flow Zone
- 64: Flow Zone
- 70: First Graph
- 72: Second Graph
- 74: Third Graph

## Claims

1. A Method for controlling a combustion engine which combusts fuel together with intake air (28), wherein an amount of intake air (28) - air flow - is accounted for by at least one controller (46) affecting the operation of the combustion engine,
comprising the steps of:
learning an air meter correction scheme on the basis of an estimated reference flow (40),
the step of learning an air meter correction scheme being activated on account of an evaluation of enabling conditions,
applying said learnt air meter correction scheme to an air meter reading (42) and feeding same to said at least one controller (46), wherein
a plurality of flow zones (60-64) are maintained for the air flow, wherein the air meter correction scheme comprises a relevant correction factor for each zone (60-64), and wherein the correction factors are interpolated for being applied to the air meter reading (42), the method being
**characterised in**
the evaluation of enabling conditions comprising the step of identifying a deceleration fuel cut off status that meets certain predefined or predefinable criteria and activating the step of learning an air meter correction scheme only when a deceleration fuel cut off status is identified and when the deceleration meets said criteria.

2. The method of Claim 1,
wherein the estimated reference flow (40) is estimated on the basis of both speed and density of the air flow.

3. The method of claim 2,
wherein the estimated reference flow (40) is estimated on the further basis of characteristics of the combustion engine.

4. The method of any one of the preceding claims,
wherein the air meter correction scheme is based on a limited number of air meter correction values and wherein based on said air meter correction values an air meter correction is interpolated and applied to the air meter reading.

5. Apparatus for controlling a combustion engine comprising means (44, 48, 50) capable of and provided for performing the method of any one of the preceding claims.

6. Computer programme with a computer readable programme code for implementing the method of any one of the claims 1 to 4 when the programme is run on a computer.

7. A computer programme product, such as a storage medium, with a computer readable programme code for implementing the method according to any one of the claims 1 to 4 when the programme code is run on a computer.

## Patentansprüche

1. Verfahren zur Steuerung einer Verbrennungskraftmaschine, die Kraftstoff zusammen mit Ansaugluft (28) verbrennt, wobei eine Ansaugluftmenge (28) - Luftstrom - von wenigstens einem Controller (46), der den Betrieb der Verbrennungskraftmaschine beeinflusst, erfasst wird, umfassend die folgenden Schritte:
Lernen eines Luftmesserkorrekturprogramms auf der Basis eines geschätzten Referenzdurchsatzes (40),
wobei der Schritt des Lernens eines Luftmesserkorrekturprogramms auf Grund einer Evaluierung befähigender Bedingungen aktiviert wird,
Anwenden des genannten gelernten Luftmesserkorrekturprogramms auf einen Luftmessermesswert (42) und Einspeisen desselben in den genannten wenigstens einen Controller (46),
wobei mehrere Strömungszonen (60-64) für den Luftstrom gepflegt werden, wobei das Luftmesserkorrekturprogramm einen relevanten Korrekturfaktor für jede Zone (60-64) umfasst und wobei die Korrekturfaktoren für die Anwendung auf den Luftmessermesswert (42) interpoliert werden,
wobei das Verfahren **dadurch gekennzeichnet ist, dass** die Evaluierung von befähigenden Bedingungen den Schritt des Identifizierens eines Zustands der Kraftstoffabschaltung bei Verzögerung, der gewisse vordefinierte oder vordefinierbare Kriterien erfüllt, und Aktivierens des Schritts des Lernens eines Luftmesserkorrekturprogramms nur dann umfasst, wenn ein Zustand der Kraftstoffabschaltung bei Verzögerung identifiziert wird und wenn die Verzögerung die genannten Kriterien erfüllt.

2. Verfahren nach Anspruch 1, bei dem der geschätzte Referenzdurchsatz (40) auf der Basis von Geschwindigkeit und Dichte des Luftstroms geschätzt wird.

3. Verfahren nach Anspruch 2, bei dem der geschätzte Referenzdurchsatz (40) auf der weiteren Basis von charakteristischen Eigenschaften der Verbrennungskraftmaschine geschätzt wird.

4. Verfahren nach einem der vorhergehenden Ansprüche, bei dem das Luftmesserkorrekturprogramm auf einer begrenzten Anzahl von Luftmesserkorrekturwerten basiert und bei dem auf der Basis der genannten Luftmesserkorrekturwerte eine Luftmesserkorrektur interpoliert wird und auf den Luftmessermesswert angewendet wird.

5. Vorrichtung zur Steuerung einer Verbrennungskraftmaschine, umfassend Mittel (44, 48, 50), die für das Verfahren nach einem der vorhergehenden Ansprüche geeignet und zu seiner Durchführung bereitgestellt sind.

6. Computerprogramm mit einem rechnerlesbaren Programmcode zum Implementieren des Verfahrens nach einem der Ansprüche 1 bis 4, wenn das Programm in einem Computer abgearbeitet wird.

7. Computerprogrammprodukt, wie z.B. ein Speichermedium, mit einem rechnerlesbaren Programmcode zum Implementieren des Verfahrens nach einem der Ansprüche 1 bis 4, wenn der Programmcode in einem Computer abgearbeitet wird.

## Revendications

1. Procédé pour commander un moteur à combustion qui fait brûler du carburant ensemble avec de l'air admis (28), dans lequel une quantité d'air admis (28) - débit d'air - est comptabilisée par au moins un contrôleur (46) qui affecte le fonctionnement du moteur à combustion, comprenant les étapes consistant à :
apprendre un schéma de correction de dosage d'air sur la base d'un débit de référence estimé (40),
l'étape d'apprentissage d'un schéma de correction de dosage d'air étant activée en se basant sur une évaluation de conditions d'activation,
appliquer ledit schéma de correction de dosage d'air appris à un dispositif de lecture de dosage d'air (42) et alimenter ce schéma audit au moins un contrôleur (46),
dans lequel une pluralité de zones de débit (60-64) sont maintenues pour le débit d'air, telles que le schéma de correction de dosage d'air comprend un facteur de correction pertinent pour chaque zone (60, 64), et dans lequel les facteurs de correction sont interpolés pour être appliqués au dispositif de lecture de dosage d'air (42),
le procédé étant **caractérisé en ce que**
l'évaluation des conditions d'activation comprend l'étape consistant à identifier un état de coupure de carburant en décélération qui satisfait certains critères prédéfinis ou prédéfinissables et l'activation de l'étape d'apprentissage d'un schéma de correction de dosage d'air uniquement quand un état de coupure de carburant en décélération est identifié et quand la décélération satisfait lesdits critères.

2. Procédé selon la revendication 1,
dans lequel le débit de référence estimé (40) est estimé sur la base à la fois de la vitesse et de la densité du débit d'air.

3. Procédé selon la revendication 2,
dans lequel le débit de référence estimé (40) est estimé en outre sur la base de caractéristiques du moteur à combustion.

4. Procédé selon l'une quelconque des revendications précédentes,
dans lequel le schéma de correction de dosage d'air est basé sur un nombre limité de valeurs de correction de dosage d'air et dans lequel, en se basant sur lesdites valeurs de correction de dosage d'air, une correction de dosage d'air est interpolée et appliquée au dispositif de lecture de dosage d'air.

5. Appareil pour commander un moteur à combustion comprenant des moyens (44, 48, 50) capables de et prévus pour exécuter le procédé selon l'une quelconque des revendications précédentes.

6. Programme d'ordinateur avec un code de programme lisible par ordinateur pour mettre en oeuvre le procédé selon l'une quelconque des revendications 1 à 4 quand le programme est exécuté sur un ordinateur.

7. Produit de programme d'ordinateur, comme un support de stockage, avec un code de programme lisible par ordinateur pour mettre en oeuvre le procédé selon l'une quelconque des revendications 1 à 4 quand le code de programme est exécuté sur un ordinateur.
